Europäisches Patentamt

European Patent Office

Office européen des brevets

(19)

(11)  EP 0 805 988 B1

(12)          **FASCICULE DE BREVET EUROPEEN**

(45) Date de publication et mention
de la délivrance du brevet:
**13.02.2002  Bulletin 2002/07**

(21) Numéro de dépôt: **96939980.7**

(22) Date de dépôt: **26.11.1996**

(51) Int Cl.⁷: **G01S 1/04**, H04B 1/707

(86) Numéro de dépôt international:
**PCT/FR96/01870**

(87) Numéro de publication internationale:
**WO 97/20227 (05.06.1997 Gazette 1997/24)**

(54) **PROCEDE DE REDUCTION AUTONOME DES SEUILS D'ACQUISITION ET DE POURSUITE DES CODES D'ETALEMENT DE SPECTRE RECUS EN ORBITE**

VERFAHREN ZUM UNABHÄNGIGEN REDUZIEREN DER SCHWELLENWERTE IN ERFASSUNG UND VERFOLGUNG VON IN ERDUMLAUF EMPFANGENEN SPREIZSPEKTRUMCODES

METHOD FOR AUTOMATICALLY LOWERING THE ACQUISITION AND TRACKING THRESHOLDS OF SPREAD SPECTRUM CODES RECEIVED IN ORBIT

(84) Etats contractants désignés:
**DE FR GB IT SE**

(30) Priorité: **27.11.1995  FR 9514031**

(43) Date de publication de la demande:
**12.11.1997  Bulletin 1997/46**

(73) Titulaire: **CENTRE NATIONAL D'ETUDES SPATIALES**
**75001 Paris (FR)**

(72) Inventeur: **ISSLER, Jean-Luc**
**F-31650 Saint-Orens (FR)**

(74) Mandataire: **Des Termes, Monique et al**
**Société Brevatome 3, rue du Docteur Lancereaux**
**75008 Paris (FR)**

(56) Documents cités:
**EP-A- 0 526 040          EP-A- 0 552 975**

• **PATENT ABSTRACTS OF JAPAN vol. 010, no. 247 (P-490), 26 Août 1986 & JP 61 076972 A (NISSAN MOTOR CO LTD), 19 Avril 1986,**

**Description**

L'invention concerne un procédé de réduction autonome des seuils d'acquisition et de poursuite des codes d'étalement de spectre reçus en orbite.

L'invention combine trois éléments de base :

- un récepteur de signaux en spectre étalé ;
- un filtre d'orbitographie embarqué ;
- une technique de réduction de seuil par aide précise en vitesse radiale.

On va considérer ci-dessous chacun de ces trois éléments.

- Le récepteur peut être n'importe quel équipement recevant des signaux en spectre étalé, à bord d'un satellite (références [1], [2], [5]). Ces signaux peuvent être émis par d'autres satellites en orbite ou depuis des points fixes au sol. A titre d'exemple, ces récepteur peuvent être du type :

  - récepteur GPS, GLONASS, GNSS1, GNSS2 ;
  - transpondeur en spectre étalé ;
  - récepteur DORIS NG.

Les constellations de satellites GPS et GLONASS sont respectivement décrites dans les références [3] et [4].

Le GNSS1 désigne les compléments géostationnaires à GPS et/ou GLONASS utilisant les charges utiles de navigation des satellites INMARSAT 3. Le GNSS2 désigne la future constellation "civile" de satellites de navigation.

DORIS NG désigne un projet de système mondial de radionavigation et de radiolocalisation spatiale, basé notamment sur l'utilisation de signaux en spectre étalé transmis par des balises au sol, et reçus par des satellites en orbite.

- Le filtre d'orbitographie est un traitement numérique, localisé dans le récepteur, par exemple. Il utilise les mesures brutes faites par ces derniers, c'est-à-dire des mesures de pseudodistance et de pseudovitesse relatives aux émetteurs de signaux en spectre étalé (au sol ou en orbite). Ces mesures sont traitées pour déterminer de façon autonome les paramètres orbitaux et/ou la position et la vitesse du satellite porteur. La définition de ces mesures est donnée dans la référence [5]. Le filtre peut être des types suivants, cités à titre d'exemple :

  - filtre de Kalman (cf. référence [6]) ;
  - filtre à moindres carrés simples ;
  - filtre à moindres carrés récursifs.

Ce filtre est également capable de déterminer les paramètres suivants :

| $D_i$ = | Distance entre le satellite et l'émetteur n° i. |
|---|---|
| $\Delta T_i$ = | Ecart de temps entre l'horloge du récepteur et l'horloge de l'émetteur n° i. |
| $V_i = \dot{D}_i$ = | Vitesse radiale entre le satellite et l'émetteur n° i. |
| $\Delta \dot{T}_i$ = | Dérive relative entre l'horloge de l'émetteur n° i et l'horloge du récepteur. |

Le filtre peut donc estimer les pseudodistances $PD_i$ et les pseudovitesses $PV_i$.

$$PD_i = D_i + C.\Delta T_i$$
$$PV_i = Vi + C.\Delta \dot{T}_i$$

Les grandeurs citées peuvent être estimées même si les signaux provenant de l'émetteur n° i ne sont pas traités par le récepteur et le filtre de navigation associé, pourvu que la position, la vitesse et les coefficients d'horloge dudit émetteur puissent être estimés ou connus.

Le navigateur orbital estime ces pseudodistances et ces pseudovitesses avec les précisions $\delta PD$ et $\delta PV$.

Le navigateur orbital peut recevoir des télécommandes de description de manoeuvre du satellite porteur. Ces manoeuvres peuvent être décrites par les paramètres $\Delta Vx(t0)$ ; $\Delta Vy(t0)$ et $\Delta Vz(t0)$, où les $\Delta V_i$ représentent les composantes de l'impulsion en vitesse prévue à la date t0.

Les manoeuvres sont décrites avec une précision notée $\delta Vx$, $\delta Vy$, $\delta Vz$ pour les trois axes. La précision globale de la description de la manoeuvre est $\delta V$, avec :

$$\delta V = \sqrt{\delta V_x^2 + \delta V_y^2 + \delta V_z^2}$$

- La technique de réduction de seuil par aide précise en vitesse radiale (ou pseudovitesse radiale) s'applique au cas de récepteurs munis d'une (ou plusieurs) boucle(s) de phase couplée(s) avec une (ou plusieurs) boucle(s) de code. On suppose que ces boucles sont réalisées en technologie numérique.

Lorsque le signal est reçu avec un rapport C/No inférieur au seuil d'accrochage classique en mode d'acquisition aidée, la boucle de porteuse est ouverte, et l'oscillateur commandé numériquement (OCN) est piloté par une prédiction externe de vitesse (ou pseudovitesse) radiale.

L'accrochage classique en mode d'acquisition aidée est illustré dans la référence [1].

Cette prédiction de vitesse doit être fine et provient d'un capteur différent du récepteur. Par exemple, ledit capteur peut être typiquement une centrale inertielle.

Une telle technique est utilisée classiquement pour la poursuite des signaux GPS à faible rapport C/No équivalent, reçus par des récepteurs GPS militaires (code C/A et code P) montés sur avions d'arme munis de centrales inertielles. Cette technique est appelée "code seulement", car seul le code pseudoaléatoire est poursuivi jusqu'à des seuils très bas.

Un document de l'art connu, référencé [9], décrit un dispositif de poursuite de signal dans un système de navigation radio. Ce dispositif comprend un circuit de quantification du signal reçu, un circuit de comparaison de phase de type numérique, un circuit diviseur de fréquence, un circuit de correction de temps de poursuite, un filtre de boucle comprenant un compteur réversible, et un circuit de détection de vitesse relative.

Un autre document de l'art connu, référencé [10], décrit un récepteur de mesure de bruit pseudoaléatoire qui permet de compenser une distorsion par propagation multiple en ajustant dynamiquement le temps de retard entre un premier et un second corrélateurs.

L'invention a pour objet un procédé de réduction autonome des seuils d'acquisition et de poursuite des codes d'étalement de spectre reçus en orbite.

Exposé de l'invention

L'invention concerne un procédé de réduction autonome des seuils d'acquisition et de poursuite des codes pseudoaléatoires d'étalement de spectre reçus en orbite par un récepteur, à bord d'un satellite, accédant à un navigateur orbital, dans lequel le récepteur comporte une boucle de phase et une boucle de code, ledit procédé comprenant l'étape de :

- réception dans le récepteur en provenance du navigateur, d'une aide de vitesse grossière nécessaire dans un mode d'acquisition assistée, permettant au récepteur de recevoir tous les signaux avec un rapport signal à bruit C/No tel que C/No>(C/No)a, dans lequel (C/No)a est un seuil de réception dans ce mode d'acquisition assistée,

caractérisé en ce que l'incertitude δPV sur la prédiction de l'aide de vitesse fine (pseudovitesse) respecte la conditions suivante :

$$\delta PV < \frac{B_{FI}}{f_i} \times C$$

dans laquelle B_{PI} est la bande de prédiction, f_i la fréquence du signal porteuse transimis par l'émetteur n°i, et C la vitesse de la lumière et en ce que ledit procédé comprend, en outre, les étapes suivantes :

- poursuite des codes pseudoaléatoires assistée par une aide de vitesse fine fournie par le navigateur orbital et correction de l'erreur entre les vitesses réelle et calculée, et
- abaissement des seuils d'accrochage des codes pseudo-aléatoires vers une valeur (C/No)avf dans laquelle (C/No)avf est un seuil de réception de codes pseudo-aléatoires dans ce mode d'acquisition assistée par l'aide de vitesse fine, la recherche de la phase du code reçu s'effectuant autour d'une prédiction de phase entretenue par l'aide de vitesse fine provenant du navigateur orbital.

Ledit procédé peut comporter une étape préliminaire pendant laquelle le récepteur démarre à froid sans aucune aide ou message externe ou interne, et accroche tous les signaux avec un rapport C/No tel que : C/No≥(C/No)_{na}, (C/No)_{na} étant le seuil d'accrochage en mode non aidé.

En cas de manoeuvre dédiée au contrôle d'orbite du satellite, le navigateur orbital reçoit la description desdites manoeuvres, et met à jour l'aide de vitesse fournie par le navigateur. Pour que l'accrochage des codes pseudoaléatoires reçus avec des faibles rapports C/No soit toujours possible en cas de manoeuvre, la condition suivante doit être respectée, au premier ordre :

$$(\delta PV + \delta V) < \frac{B_{FI}}{f_i} \times C$$

où δPV est l'incertitude sur la prédiction sur la pseudovitesse fournie par le navigateur, en absence de manoeuvre ; où B_{FI} est la bande de prédétection, C la vitesse de la lumière et f_i la fréquence du signal porteuse transmis par l'émetteur n° i.

Lorsqu'un code pseudoaléatoire est poursuivi avec un rapport C/No tel que : (C / No)_{avf} < C / No < (C / No)_a, les mises à jour des paramètres caractéristiques des émetteurs sont communiquées au récepteur à l'aide de télécommandes externes.

Le procédé de l'invention consiste à réduire les seuils d'acquisition et de poursuite des codes d'étalement de spectre, par des récepteurs pour satellites, munis d'un filtre d'orbitographie embarqué. Cette réduction de seuil est réalisée de façon autonome par lesdits récepteurs utilisant l'invention. Cette réduction de seuil peut être spectaculaire.

- La figure 1 illustre un schéma synoptique d'un récepteur à seuil réduit par aide de vitesse fine externe ;
- la figure 2 illustre un schéma synoptique d'un récepteur intégrant le dispositif de l'invention ;
- la figure 3 illustre une variante de l'invention.

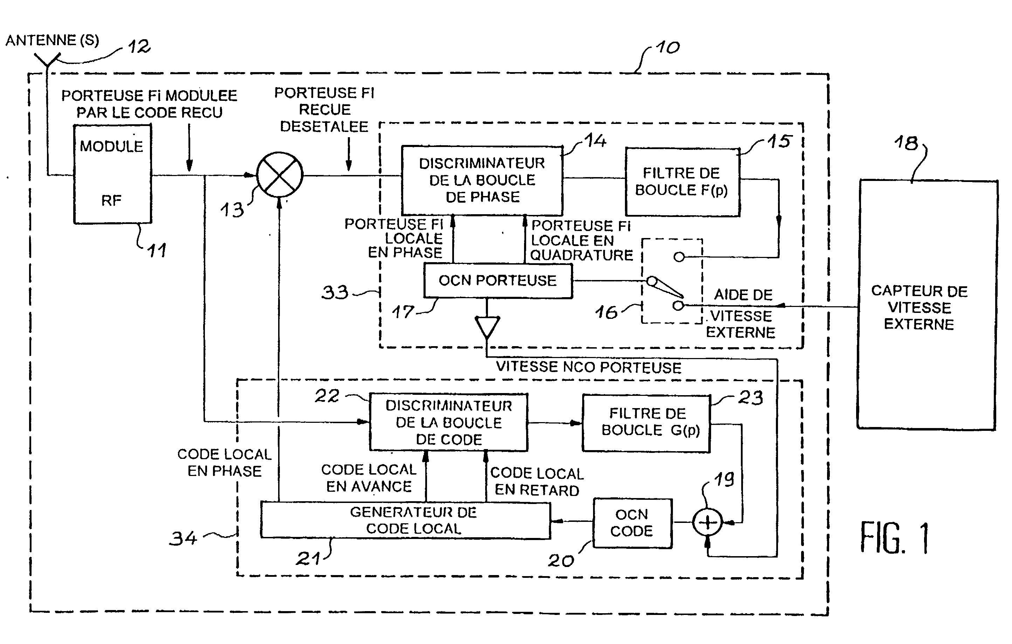

La figure 1 illustre un récepteur en spectre étalé à seuil réduit par aide de vitesse fine externe, seule l'architecture du traitement numérique étant représentée.

Ce récepteur 10 comprend un module RF 11 relié à une antenne 12 dont le signal de sortie est entré sur un corrélateur 13 lui-même relié, en sortie, à un discriminateur 14 de la boucle de phase suivi d'un filtre de boucle 15, et d'un commutateur 16. Un module OCN (oscillateur commandé numériquement) porteuse 17 transmet une porteuse locale $F_i$ en phase et en quadrature au discriminateur 14, et est relié à une autre borne du commutateur 16. Le commutateur 16 reçoit également un signal en provenance d'un capteur de vitesse externe 18 (centrale inertielle par exemple).

Le module OCN porteuse envoie un signal de vitesse OCN porteuse sur une première entrée d'un sommateur 19 relié en sortie à un module OCN code 20, et à un générateur de code local 21. Ce générateur 21 est relié d'une part au corrélateur 13 et lui délivre le code local en phase, et d'autre part à un discriminateur de la boucle de code 22 et lui délivre le code local en avance et le code local en retard, un filtre de boucle G (p) 23 étant disposé entre la sortie de ce discriminateur 22 et une seconde entrée du sommateur 19.

On a ainsi une boucle de phase 33 et une boucle de code 34.

La boucle de code, chargée de la poursuite des codes pseudoaléatoires, est "poussée" par l'aide de vitesse. En d'autres termes, l'oscillateur OCN de cette boucle fait varier la phase du code local avec une vitesse égale à l'aide de la prédiction externe de vitesse. La boucle de code ainsi "poussée" rattrape l'erreur entre la vitesse réelle et la vitesse calculée.

L'ordre de cette boucle doit être suffisant pour maintenir l'oscillateur OCN asservi, ce qui permet de produire des mesures de pseudodistance.

La boucle de code, chargée de l'acquisition des codes pseudoaléatoires, est également "poussée" par l'aide de vitesse fine. La recherche de la phase du code reçu s'effectue autour d'une prédiction de phase (prépositionnement distance) entretenue par l'aide de vitesse externe.

La zone de recherche de la phase du code reçue est plus petite que dans le cas d'une acquisition en mode aidé classique. Il en est de même pour la zone de recherche de la fréquence de la porteuse reçue. En effet, le principe décrit fonctionne si l'incertitude de la prédiction Doppler $\Delta F_D$ est inférieure à la bande de prédétection $B_{FI}$.

L'incertitude $\delta PV$ sur la prédiction de pseudovitesse doit donc respecter les relations suivantes :

$$\Delta F_D < B_{FI} \qquad \text{soit} : \delta PV < \frac{B_{FI}}{f_i} \times C$$

où C est la vitesse de la lumière et $f_i$ la fréquence du signal porteuse transmis par l'émetteur n° i.

Ainsi, les zones d'incertitude en Doppler et en distance étant plus faibles que dans les cas classiques, la recherche d'énergie peut s'effectuer avec une vitesse de balayage du code local beaucoup plus lente que dans ces cas classiques, pour une même durée de recherche notée T. Le seuil d'acquisition s'en trouve ainsi réduit. Des techniques de réjection des faux accrochages doivent être mises en oeuvre en cas de réception simultanée de plusieurs codes pseudoaléatoires, avec des C/No disparates.

| | |
|---|---|
| $(C/No)_{na} =$ | Seuil d'accrochage en mode aidé. |
| $(C/No)_a =$ | Seuil d'accrochage en mode d'acquisition aidée classique |
| $(C/No)_{avf} =$ | Seuil d'accrochage des codes pseudoaléatoires en mode d'acquisition aidée par une aide fine de vitesse |

La définition des seuils $(C/No)_{na}$ et $(C/No)_a$ est détaillée en référence [1].

Le seuil $(C/No)_{avf}$ est une fonction de plusieurs paramètres.

$$(C/No)_{avf} = g(T; \delta PV; B_{FI})$$

L'invention se caractérise par le procédé suivant, mis en oeuvre dans un récepteur en spectre étalé pour satellite, muni d'un navigateur orbital.

*(facultative)*

Le récepteur démarre à froid (sans aucune aide ou message externe ou interne). Il accroche tous les signaux avec un rapport C/No tel que :

$$C/No \geq (C/No)_{na}$$

Les premiers signaux accrochés peuvent éventuellement permettre au récepteur de :

- recevoir des messages permettant de déterminer la position et/ou la vitesse et/ou les coefficients d'horloge des émetteurs n° i ;
- faire converger le navigateur orbital, à l'aide des premières mesures de pseudodistance et de pseudovitesse réalisées.

Cette première étape est nécessaire pour les missions spatiales entièrement autonomes.

Le récepteur reçoit des aides nécessaires à l'acquisition aidée classique. Ces aides sont peu précises (grossières) et du type :

1) Date et temps de l'horloge du récepteur.
2) Positions/vitesses (ou, éventuellement, paramètres orbitaux) des émetteurs.
3) Position/vitesse ou paramètres orbitaux du satellite porteur.

Ces aides peuvent provenir en partie ou totalement de l'étape 1. Dans ce cas, elles sont internes au récepteur (exemple : les positions/vitesses des émetteurs peuvent être transmises par lesdits émetteurs) la fonction d'autonomie est conservée.

Dans le cas où tout ou partie de ces aides grossières est communiqué au récepteur par le biais de télécommandes externes, celui-ci n'est plus autonome.

Dans le cas où l'étape 1 n'est pas réalisée, ces aides sont obligatoirement externes au récepteur.

Ces aides grossières permettent au récepteur d'accrocher tous les signaux avec un rapport C/No tel que :

$$C/No > (C/No)_a$$

Le nombre de mesures de pseudovitesse et de pseudodistance augmente alors, par rapport au cas de l'étape 1, car :

$$(C/No)_a < (C/No)_{na}.$$

Le nombre de ces mesures est supposé suffisant pour faire converger le navigateur orbital fournissant les paramètres orbitaux du satellite porteur avec une précision meilleure que dans l'étape 1.

L'étape 2 étant réalisée, on suppose que la précision des paramètres de sortie du navigateur orbital et des paramètres caractéristiques des émetteurs est compatible avec la finesse de l'aide de vitesse requise pour réduire encore les seuils d'accrochage des codes pseudoaléatoires, jusqu'à la valeur $(C/No)_{avf}$.

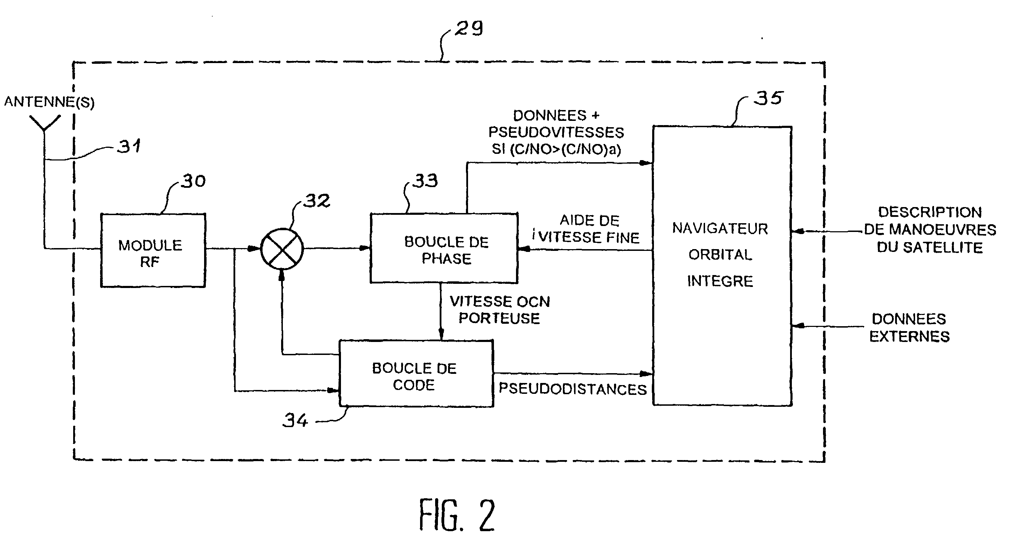

Contrairement à l'état de l'art connu, l'aide fine de vitesse provient du navigateur orbital intégré au récepteur. Cette aide est donc interne et l'autonomie est conservée, comme représenté sur la figure 2.

La précision du navigateur peut donc être encore améliorée. Par ailleurs, en cas de dégradation progressive du bilan de liaison avec les émetteurs, la dégradation de cette précision peut être limitée.

On a donc :

$$(C/No)_{avf} < (C/No)_a$$

En cas de manoeuvre dédiée au contrôle d'orbite du satellite, le navigateur orbital reçoit la description desdites manoeuvres, et met à jour l'aide de vitesse fournie par le navigateur.

Pour que l'accrochage des codes pseudoaléatoires reçus avec des faibles rapports C/No soit toujours possible en cas de manoeuvres, la condition suivante doit être respectée au premier ordre :

$$(\delta PV + \delta V) < \frac{B_{FI}}{f_i} \times C$$

où $\delta PV$ est la prédiction sur la pseudovitesse fournie par le navigateur, en absence de manoeuvre.

Lorsqu'un code pseudoaléatoire est poursuivi avec un rapport C/No tel que :

$$(C/No)_{avf} < C/No < (C/No)_a$$

la démodulation des données du message transmis par les émetteurs n'est pas possible.

En effet, cette démodulation doit être effectuée par la boucle de porteuse (boucle de phase). Or cette boucle est ouverte lorsque le C/No respecte la double inégalité citée si dessus.

Les mises à jour des paramètres caractéristiques des émetteurs (positions et/ou vitesses et/ou coefficients d'horloge) doivent donc obligatoirement être communiquées au récepteur à l'aide de télécommandes externes. Par exemple, dans le cas d'un récepteur GPS ou GLONASS, ces paramètres peuvent être les éphémérides de la constellation utilisée.

La figure 2 illustre un récepteur 29 de signaux en spectre étalé pour satellites qui comprend un module RF 30, recevant un signal en provenance d'une antenne 31, relié à une première entrée d'un corrélateur 32 suivi d'une boucle de phase 33 reliée à une boucle de code 34 qui reçoit également le signal de sortie du module RF 30, et dont la sortie est reliée à une seconde entrée du corrélateur 32, et un navigateur orbital intégré 35 qui reçoit de la boucle de phase les données et les pseudovitesses si $(C/No) > (C/No)_a$ et qui lui envoie une aide de vitesse fine, et qui reçoit de la boucle de code les pseudodistances.

Le navigateur orbital intégré reçoit la description de manoeuvres du satellite et les données externes.

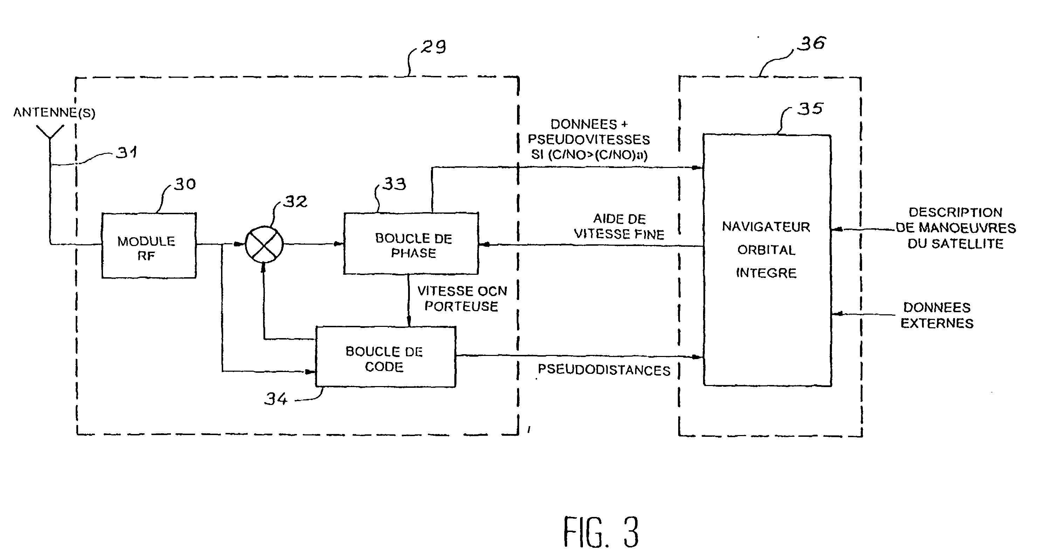

La figure 3 illustre une variante de l'invention, où le navigateur orbital est intégré dans un calculateur de bord 36 présent dans le satellite.

Les applications du procédé de l'invention concernant la réception de signaux en spectre étalé à bord de satellites concernent les cas défavorables de bilans de liaison entre les émetteurs utilisés et lesdits satellites.

Par exemple ces applications peuvent être :

* Navigation à l'aide d'un récepteur de constellation de satellites (comme GPS, GLONASS).
* Navigation à l'aide d'un transpondeur en spectre étalé. Le bilan de liaison peut être défavorable en début et en fin de survol d'une station de télécommande/télémesure (TM/TC).
* Navigation à l'aide d'un récepteur de signaux en spectre étalé transmis par un parc de balises au sol, munies d'antenne à diagramme de type hémisphérique. La puissance transmise par ces balises est supposée optimisée pour une utilisation par des satellites en orbite basse. Le bilan de liaison est donc supposé moins favorable pour un satellite en orbite géostationnaire, par exemple.

* Réception en orbite de signaux en spectre étalé, en environnement brouillé par des émetteurs radioélectriques non désirés. Le rapport C/NO équivalent des signaux reçus est diminué par rapport au cas d'un environnement non brouillé. Le bilan de liaison est donc dégradé et le procédé de l'invention peut être nécessaire dans ce cas.

* Navigation à l'aide d'un récepteur GPS, ou DORIS NG en orbite de transfert géostationnaire. Une orbite de transfert géostationnaire peut être des types suivants :

  - orbite de transfert géostationnaire classique (OTG) ;
  - orbite supersynchrone (OSPS) ;
  - orbite sub-synchrone (OSBS) ;
  - orbite de dérive (ODD) ;

Ces navigations peuvent être réalisées avec deux antennes à faible gain, si le seuil d'accrochage des signaux est faible (cf. référence [7]).

* Navigation à l'aide d'un récepteur en orbite à haut apogée pouvant être des types suivants cités à titre d'exemple (cf. référence [8]) :

  - orbite Molniya ;
  - orbite Tundra ;
  - orbite Archimède.

* Navigation à l'aide d'un récepteur en orbite circulaire pour constellation de satellites de navigation, de période de l'ordre de douze heures. La réception de balises au sol à antenne hémisphérique est adaptée à ce cas de figure.

* Navigation à l'aide d'un récepteur en orbite basse, connecté à une ou plusieurs antennes de réception à faible coût, et donc non optimisées, mais suffisamment bonnes pour permettre au récepteur de réaliser l'étape 2 décrite dans l'invention.

[1] "Orbital Navigation With a GPS Receiver On The HETE Spacecraft" (ION GPS janvier 94, pages 645-656)

[2] "ESA Dual-Standard S-Band Transponder : A Versatile TT&C Equipment For Communications Via A Data Relay Satellite Or Directly With The Ground Network" de J.L. Gerner (42nd Congress Of The International Astronautical Federation, 5-11 octobre 1991)

[3] "Accord de standardisation ; caractéristiques du système mondial de détermination de la position NAVSTAR (GPS)" (OTAN, STANAG 4294)

[4] "GLONASS Approaches Full Operational Capability (FOC)" de P. Daly (ION GPS, septembre 1995)

[5] "Techniques et technologies des véhicules spatiaux module 6. Localisation spatiale" (Editions Cépaduès)

[6] "Low-Orbit Navigation Concepts" de H.James Rome (vol. 35, n° 3, Fall 1988, pages 371-390)

[7] "GPS Techniques For Navigation Of Geostationary Satellites" de P. Ferrage, J.L. Issler, G. Campan et J.C. Durand (ION GPS, 12-15 septembre 1995)

[8] "Applicability Of GPS-Based Orbit Determination Systems To A Wide Range of HEO Missions" de J. Potti, P. Bernedo et A. Pasetti (ION GPS, 12-15 septembre 1995)

[9] Patent Abstract of Japan vol. 010, No. 247 (P-490), 26 août 1986 & JP 61 076972 A (Nissan Motor Co LTD), 19 avril 1986

[10] EP-A-0 552 975 (Novatel Communications LTD)

## Revendications

1. Procédé de réduction autonome des seuils d'acquisition et de poursuite des codes pseudoaléatoires d'étalement de spectre reçus en orbite par un récepteur, à bord d'un satellite, accédant à un navigateur orbital, dans lequel le récepteur comporte une boucle de phase et une boucle de code, ledit procédé comprenant l'étape de :

   - réception dans le récepteur en provenance du navigateur, d'une aide de vitesse grossière nécessaire dans un mode d'acquisition assistée, permettant au récepteur de recevoir tous les signaux avec un rapport signal à bruit C/No tel que C/No>(C/No)a, dans lequel (C/No)a est un seuil de réception dans ce mode d'acquisition assistée,

   caractérisé en ce que l'incertitude δPV sur la prédiction de l'aide de vitesse fine (pseudovitesse) respecte la conditions suivante :

   $$\delta PV < \frac{B_{FI}}{f_i} \times C$$

   dans laquelle $B_{FI}$ est la bande de prédiction, $f_i$ la

fréquence du signal porteuse transmis par l'émetteur n°i, et C la vitesse de la lumière,
et **en ce que** ledit procédé comprend, en outre, les étapes suivantes :

- poursuite des codes pseudoaléatoires assistée par une aide de vitesse fine fournie par le navigateur orbital et correction de l'erreur entre les vitesses réelle et calculée, et
- abaissement des seuils d'accrochage des codes pseudo-aléatoires vers une valeur (C/No) avf dans laquelle (C/No)avf est un seuil de réception de codes pseudo-aléatoires dans ce mode d'acquisition assistée par l'aide de vitesse fine, la recherche de la phase du code reçu s'effectuant autour d'une prédiction de phase entretenue par l'aide de vitesse fine provenant du navigateur orbital.

2. Procédé selon la revendication 1, **caractérisé en ce qu'**il comporte une étape préliminaire pendant laquelle le récepteur démarre à froid sans aucune aide ou message externe ou interne, et accroche tous les signaux avec un rapport C/No tel que : C/No≥(C/No)$_{na}$, (C/No)$_{na}$ étant le seuil d'accrochage en mode non aidé.

3. Procédé selon la revendication 1, **caractérisé en ce qu'**en cas de manoeuvre dédiée au contrôle d'orbite du satellite, le navigateur orbital reçoit la description desdites manoeuvres, et met à jour l'aide de vitesse fournie par le navigateur, et **en ce que** la condition suivante est respectée :

$$(\delta PV + \delta V) < \frac{B_{FI}}{f_i} \times C$$

où $\delta PV$ est la précision sur la pseudovitesse fournie par le navigateur, en absence de manoeuvre, où $\delta V$ est la précision sur la description de la manoeuvre, où $B_{FI}$ est la bande de prédiction, C est la vitesse de la lumière et $f_i$ la fréquence du signal porteuse transmis par l'émetteur n° i.

4. Procédé selon la revendication 1, **caractérisé en ce que** lorsqu'un code pseudoaléatoire est poursuivi avec un rapport C/No tel que : (C/No)$_{avf}$<C/No<(C/No)$_a$, les mises à jour des paramètres caractéristiques des émetteurs sont communiquées au récepteur à l'aide de télécommandes externes.

**Patentansprüche**

1. Verfahren zum unabhängigen Reduzieren der Erfassungs- und Verfolgungs-Schwellenwerte der Spreizspektrum-Zufallscodes, empfangen im Umlauf durch einen Empfänger an Bord eines Satelliten, den Zugang zu einem Orbitalnavigator bildend, bei dem der Empfänger eine Phasenschleife und eine Codeschleife aufweist, wobei dieses Verfahren die folgenden Schritte umfasst:

- Empfang einer vom Navigator kommenden, bei einem unterstützten Erfassungsmodus nötigen groben Geschwindigkeitshilfe in dem Empfänger, die dem Empfänger ermöglicht, alle Signale mit einem Signal/Geräusch-Verhältnis C/No so zu empfangen, dass C/No>(C/No)a, wobei (C/No)a ein Empfangsschwellenwert bei diesem unterstützten Erfassungsmodus ist,

**dadurch gekennzeichnet, dass** die Unsicherheit $\delta PV$ bezüglich der Voraussage der feinen Geschwindigkeitshilfe (Pseudogeschwindigkeit) die folgende Bedingung erfüllt:

$$\delta PV < \frac{B_{FI}}{f_i} \times C$$

bei der $B_{FI}$ das Voraussageband, $f_i$ die Frequenz des durch den Sender Nr. i übertragenen Trägersignals und C die Lichtgeschwindigkeit ist, und dadurch, dass das genannte Verfahren außerdem die folgenden Schritte umfasst:

- Verfolgung der Pseudozufallscodes, unterstützt durch eine Feingeschwindigkeitshilfe, geliefert durch den Orbitalnavigator, und Korrektur des Fehlers zwischen der wirklichen und der berechneten Geschwindigkeit, und
- Absenkung der Einfangschwellenwerte der Pseudozufallscodes auf einen Wert (C/No)avf, bei dem (C/No)avf ein Empfangsschwellenwert von Pseudozufallscodes in diesem durch die feine Geschwindkeitshilfe unterstützten Erfassungsmodus ist, wobei die Suche der Phase des empfangenen Codes um eine Phasenvoraussage herum erfolgt, die mit Hilfe der von dem Orbitalnavigator kommenden feinen Geschwindigkeitshilfe erhalten wird.

2. Verfahren nach Anspruch 1, **dadurch gekennzeichnet, dass** es einen Vorausschritt umfasst, während dem der Empfänger unvermittelt ohne jede externe oder interne Hilfe oder Mitteilung startet und alle Signale mit einem Verhältnis C/No einfängt, z.B. C/No≥(C/No)$_{na}$, wobei (C/No)$_{na}$ der Einfangschwellenwert im nicht-unterstützten Modus ist.

3. Verfahren nach Anspruch 1, **dadurch gekennzeichnet, dass** im Falle eines die Kontrolle der Umlaufbahn des Satelliten betreffenden Manövers der Orbitalnavigator die Beschreibung dieser Manöver erhält und die durch den Navigator gelieferte Geschwindigkeitshilfe aktualisiert, und dadurch, dass die folgende Bedingung erfüllt wird:

$$(\delta PV + \delta V) < \frac{B_{FI}}{f_i} \times C$$

wo $\delta PV$ die Genauigkeit bezüglich der durch den Navigator gelieferten Pseudogeschwindigkeit ist, ohne Manöver, wo $\delta V$ die Genauigkeit bezüglich der Beschreibung des Manövers ist, wo $B_{FI}$ das Voraussageband ist, C die Lichtgeschwindigkeit ist und $f_i$ die Frequenz des Trägersignals ist, übertragen durch den Sender Nr. i.

4. Verfahren nach Anspruch 1, **dadurch gekennzeichnet, dass** dann, wenn auf einen Pseudozufallscode ein Verhältnis C/No folgt, z.B. $(C/No)_{avf} < C/No < (C/No)_a$, die Aktualisierungen der charakteristischen Parameter der Sender dem Empfänger mit Hilfe von externen Fernsteuerungen mitgeteilt werden.

## Claims

1. Process for the autonomous reduction of acquisition thresholds and tracking of spread spectrum pseudo-random codes received in orbit by a receiver, on board a satellite, accessing an orbital navigator, wherein the receiver comprises a phase loop and a code loop, said process comprising the stage of:

   - reception in the receiver from the navigator of a rough velocity aid necessary in an assisted acquisition mode, enabling the receiver to receive all the signals with a signal to noise ratio C/No, such that $C/No > (C/No)_a$,

   where $(C/No)_a$ is a reception threshold in this assisted acquisition mode, **characterized in that** the uncertainty $\delta PV$ on the prediction of the fine velocity aid (pseudovelocity) respects the following condition $\delta PV < \frac{B_{FI}}{f_1} \times C$ in which $B_{FI}$ is the prediction band, $f_1$ the frequency of the carrier signal transmitted by the transmitter no. i and C is the speed of light and **in that** said process also comprises the following stages:

   - tracking pseudo-random codes assisted by a fine velocity aid supplied by the orbital navigator and correction of the error between the real and calculated velocities and
   - lowering the reception thresholds of the pseudo-random codes to a value (C/No)avf in which

$(C/No)avf$ is a pseudo-random code reception threshold in this acquisition mode assisted by the fine velocity aid, the seeking of the phase of the code received taking place about a phase prediction maintained by the fine velocity aid coming from the orbital navigator.

2. Process according to claim 1, **characterized in that** it comprises a preliminary step in which the receiver cold starts without any internal or external assistance or message and receives all signals with a C/No ratio such as $C/No \geq (C/No)na$, where $(C/No)na$ is the reception threshold in the nonassisted mode.

3. Process according to claim 1, **characterized in that** during a manoeuvre to control the orbit of the satellite the orbital navigator receives a description of said manoeuvres and updates the velocity aid supplied by the navigator, and **in that** the following condition is satisfied:

$$(\delta PV + \delta v) < \frac{B_{FI}}{f_i} \times C$$

where $\delta PV$ is the precision on the pseudovelocity supplied by the navigator, in the absence of a manoeuvre, where $\delta V$ is the precision on the description of th manoeuvre, where $B_{FI}$ is the prediction band, C is the speed of light and $f_i$ the frequency of the carrier signal transmitted by the transmitter No. i.

4. Process according to claim 1, **characterized in that** when a pseudo-random code is tracked with a C/No ratio such as $(C/No)_{avf} < C/No < (C/No)_a$, the updates of the characteristic parameters of the transmitters are sent to the receiver by means of remote commands external to the system.

FIG. 1

ANTENNE (S) ~ 12

10

PORTEUSE Fi MODULEE
PAR LE CODE RECU

PORTEUSE FI
RECUE
DESETALEE

MODULE

RF

11

13

PORTEUSE FI
RECUE
DESETALEE

DISCRIMINATEUR
DE LA BOUCLE
DE PHASE ~ 14

FILTRE DE
BOUCLE F(p) ~ 15

PORTEUSE FI
LOCALE
EN PHASE

PORTEUSE FI
LOCALE EN
QUADRATURE

33

OCN PORTEUSE

17

16

AIDE DE
VITESSE
EXTERNE

18

CAPTEUR DE
VITESSE
EXTERNE

VITESSE NCO PORTEUSE

CODE LOCAL
EN PHASE

22

DISCRIMINATEUR
DE LA BOUCLE
DE CODE

FILTRE DE
BOUCLE G(p) ~ 23

CODE LOCAL
EN AVANCE

CODE LOCAL
EN RETARD

19

34

GENERATEUR DE
CODE LOCAL

OCN
CODE

21

20

EP 0 805 988 B1

9

FIG. 2

EP 0 805 988 B1

ANTENNE(S)

31

30 MODULE RF

32

33 BOUCLE DE PHASE

DONNEES +
PSEUDOVITESSES
SI (C/NO>(C/NO)a)

29

AIDE DE
VITESSE FINE

VITESSE OCN
PORTEUSE

34 BOUCLE DE CODE

PSEUDODISTANCES

36

35 NAVIGATEUR
ORBITAL
INTEGRE

DESCRIPTION
DE MANOEUVRES
DU SATELLITE

DONNEES
EXTERNES

FIG. 3